# EUROPÄISCHE PATENTSCHRIFT

(11) **EP 1 754 428 B1**
(45) Veröffentlichungstag und Bekanntmachung des Hinweises auf die Patenterteilung: **26.03.2008**
(21) Anmeldenummer: 06016592.5
(22) Anmeldetag: 09.08.2006
(51) Int. Cl.: A47C 23/04, A47C 7/34

(54) **Matratzenfeder**
Matressspring
Ressort de matelas

(30) Priorität: 16.08.2005 DE 202005013020 U
(43) Veröffentlichungstag der Anmeldung: 21.02.2007
(73) Patentinhaber: Hartmann, Siegbert, 32584 Löhne (DE)
(72) Erfinder: Hartmann, Siegbert, 32584 Löhne (DE)
(74) Vertreter: Rolf, Gudrun

(56) Entgegenhaltungen:
- DE-U1- 20 108 322
- DE-U1-7202004 017 61

## Beschreibung

Die Erfindung betrifft eine Matratzenfeder zum Einbau in Polsterkissen oder Matratzen, mit einer oberen und einer unteren Auflagerfläche, mit Lagern auf den zueinander gewandten Innenseiten der Auflagerflächen für an den Enden von Federarmen angeordneten Lagerschalen, vgl. dem Oberbegriff des Anspruchs 1.

Es ist eine solche Matratzenfeder bekannt, DE 20 2004 017 617 U1, die ein einteiliges Federelement mit mehreren Federarmen aufweist, welche an ihren Enden mit auf als Drehachsen aufklippsbaren Lagerschalen versehen sind.

Die Einteiligkeit des Federelementes dieser bekannten Matratzenfeder ist in sofern nachteilig, als dass deren Produktion ein aufwendiges Werkzeug erfordert und auf Grund der taillierten Form des Federelementes nur eine geringe Seitenstabilität der Matratzenfeder erzielt werden kann.

Aufgabe der Erfindung ist es eine Matratzenfeder zur Verfügung zu stellen, die kostengünstig und auf einfache Art und Weise herzustellen und zusammenzubauen ist und die bei einer außermittigen vertikalen Belastung ebenso wie bei einer zentrischen vertikalen Belastung ein verbessertes und homogeneres Federverhalten aufweist.

Die Lösung dieser Aufgabe erfolgt in Verbindung mit den Oberbegriffsmerkmalen erfindungsgemäß dadurch, dass separate Federarme im benachbarten Bereich der Lagerschalen mit sich in Richtung der Innenseiten der Auflagerflächen und permanent daran anliegenden Stützlaschen versehen sind.

Die separate Ausbildung der Federarme führt zunächst zu einem wirtschaftlicheren Bauteil, sowie zu einer gesteigerten Flexibilität bei der Ausgestaltung von Varianten, seien es solche mit zwei, drei, vier oder mehr Federarmen. Diese separaten, bogenförmig vorgeformten Federarme können mit ihrer Wölbung konkav nach innen auf den Lagern aufgeklippst werden, sind bevorzugt aber konvex nach Außen gerichtet, wodurch sich die Verformungsreaktion der gesamten Matratzenfeder bei einer außermittigen Belastung der Auflagerflächen weniger von einer mittigen Belastung der Auflagerflächen unterscheidet.

Die Anordnung der Federarme in einer seitlichen Position an den Lageschalen führt dazu, dass bei einer vertikalen Belastung der Matratzenfeder zunächst eine Drehung der Lagerschalen um die Lagerdrehachsen erfolgt, bevor von den Federarmen eine größere Reaktionskraft zur Verfügung gestellt werden kann. Dieser Leerhub wird von den erfindungsgemäßen Stützlaschen wirkungsvoll verhindert, da diese permanent an den Innenseiten der Auflagerflächen anliegen und bereits bei der kleinsten Auslenkung der Federarme eine Reaktionskraft zur Verfügung stellen. Das Federverhalten einer solchen Matratzenfeder ist gegenüber einer bis auf die Stützlaschen identisch ausgebildete Matratzenfeder deutlich verbessert, da kein merklicher Leerweg der Auflagerflächen bis zum merkbaren Eintreten einer ansteigenden Reaktionskraft erkennbar ist.

Weitere vorteilhafte Ausgestaltungen des Gegenstandes der Erfindung ergeben sich mit und in Kombination aus den nachfolgenden Unteransprüchen.

Gemäß einer besonders bevorzugten Variante der erfinderischen Matratzenfeder sind die Federarme streifenförmig und leicht bauchig nach Außen gewölbt ausgebildet und zu viert radial um die Hochachse der Matratzenfeder angeordnet. Bei einer maximalen Verformung der Federarme sind die etwa u-förmig mit zu den Auflagerflächen etwa parallelen Seitenschenken elastisch verformt.

Je nach gewünschter Federfunktion können die streifigen Federarme natürlich auch teilweise oder alle gemeinsam mit ihrer bauchigen Wölbung nach innen gewölbt eingebaut sein. Die Federarme können jedoch auch falten- oder wellenförmig ausgeführt sein, wobei sie jeweils im Bereich der Lageschalen mit sich in Richtung der Innenseiten der Auflagerflächen an diesen abstützenden Stützlaschen versehen sind, um ein sofortiges Ansprechen der Matratzenfeder zu gewährleisten.

Entsprechend einer bevorzugten Ausführungsform sind die Lager als Drehlager mit Drehachsen und die Lagerschalen als elastisch auf die Drehachsen, diese teilweise umgreifend, aufklippsbaren Hohlzylinderabschnitten ausgebildet, sodass das elastische Kunststoffmaterial der Federarme optimal und gleichmäßig belastet werden kann. Denkbar ist natürlich auch die Verwendung von Festlagern, die jedoch zur Sicherstellung einer homogenen Belastung der Federarme besonderer Aufmerksamkeit bedürfen.

Die Auflagerflächen sind bevorzugterweise mit den Lagern für die Federarme einteilig aus einem wenig elastischen Kunststoffmaterial hergestellt, so dass sich die Bauteilvielfalt zur Verwirklichung der erfinderischen Matratzenfeder deutlich in Grenzen hält.

Entsprechend einer weiteren bevorzugten Ausführungsform des Gegenstandes der Erfindung sind mehrere obere und untere Auflagerflächen regelmäßig zueinander versetzt angeordnet und durch wechselseitiges Verrasten der Federarme zu einem zusammenhängenden Federnfeld miteinander vernetzt, sodass der mechanische Zusammenhalt und die Homogenität der Liegefläche einer mit den erfinderischen Matratzenfedern aufgebauten Matratze deutlich verbessert wird.

Entsprechend einer weiteren Ausgestaltung ist an einer Außenseite einer nach unten gerichteten Auflagerfläche ein Halteelement zur Festlegung der Matratzenfeder an einem Bettholm angeordnet, so dass sich aus der Matratzenfeder ohne große konstruktive Schwierigkeiten ein Einzelfederelement zur Konstruktion einer Untermatratze zur Verfügung stellen lässt.

Ein Ausführungsbeispiel der Erfindung ist anhand der Zeichnungen näher erläutert. Es zeigen:

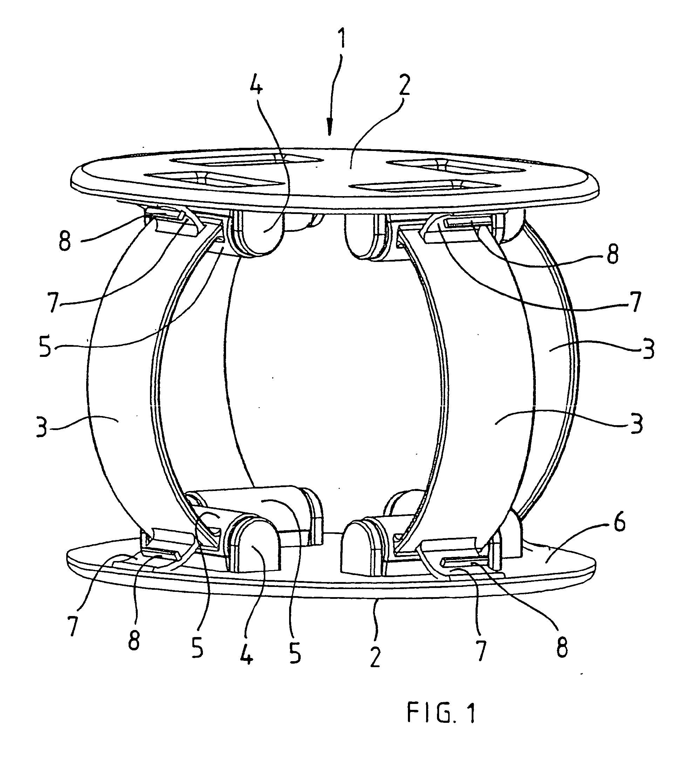

- Fig. 1: eine räumliche Ansicht der Matratzenfeder,

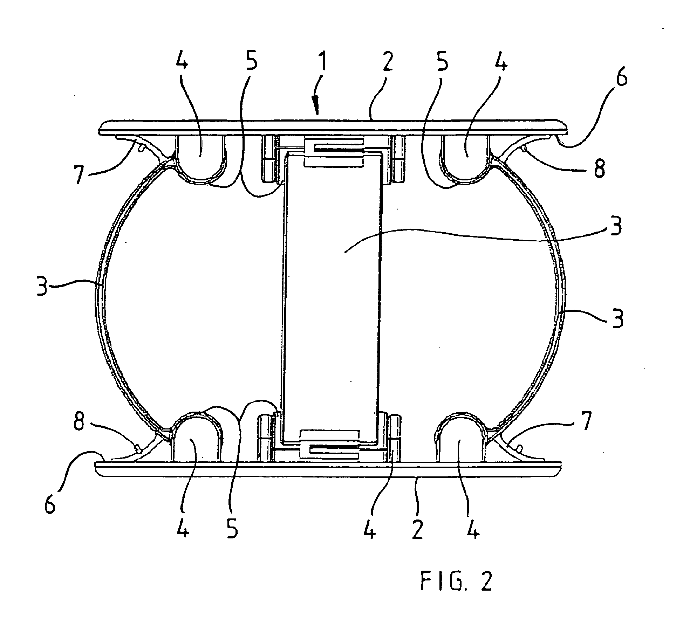

- Fig. 2: eine Seitenansicht der Matratzenfeder gemäß Fig. 1,
- Fig. 3: ein Federnfeld aus Auflagerflächen und Federarmen der Matratzenfeder und
- Fig. 4: eine räumliche Darstellung zweier zu Einzelfedersegmenten einer Untermatratze erweiterten Matratzenfedern.

Die Matratzenfeder 1 zum Einbau in Polsterkissen oder Matratzen besteht aus einer oberen und einer unteren Auflagerfläche 2 mit Lagern 4 auf ihren zueinander gewandten Innenseiten 6 für die an ihren Enden mit Lagerschalen 5 versehenen Federarme 3.

Die Federarme 3 sind leicht nach außen gewölbt ausgebildet und weisen im unmittelbar benachbarten Bereich zu den Lagerschalen 5 sich in Richtung der Innenseiten 6 der Auflagerflächen 2 permanent daran anliegende Stützlaschen 7 auf, wobei sie auch leicht vorgespannt sein können, um eine sofortige Stützwirkung zu erzielen.

Die Stützlaschen 7 sind selber mit Stegen 8 versehen, die quer zur Längsrichtung der Stützlaschen 7 auf der den Innenseiten 6 der Auflagerflächen 2 entgegengesetzten Seite der Stützlaschen angeordnet sind und bei einer starken Kompression der Matratzenfeder auf den Oberflächen der Federarme 3 aufliegen.

Die Auflagerflächen 2 sind einteilig mit den Lagern 4 ausgebildet und weisen Durchbrechungen in ihren Oberflächen auf, die konstruktiv bedingt sind oder zu Lüftungszwecken der Materatzenauflage dienen.

Die vier Federarme 3 sind zentrisch um eine Hochachse der Matratzenfeder 1 angeordnet und mit ihren Lagerschalen 5 auf die Lager 4 der Auflagerflächen 2 aufgeklippst, wobei Lager 4 und Lagerschalen 5 als Drehlager ausgebildet sind.

Die Stützlaschen 7 können bei einer unbelasteten Matratzenfeder 1 nur an der Innenseite 6 der Auflagerflächen 2 anliegen oder aber auch geringfügig vorgespannt sein, um das Ansprechverhalten der Matzratzenfeder 1 zu verbessern.

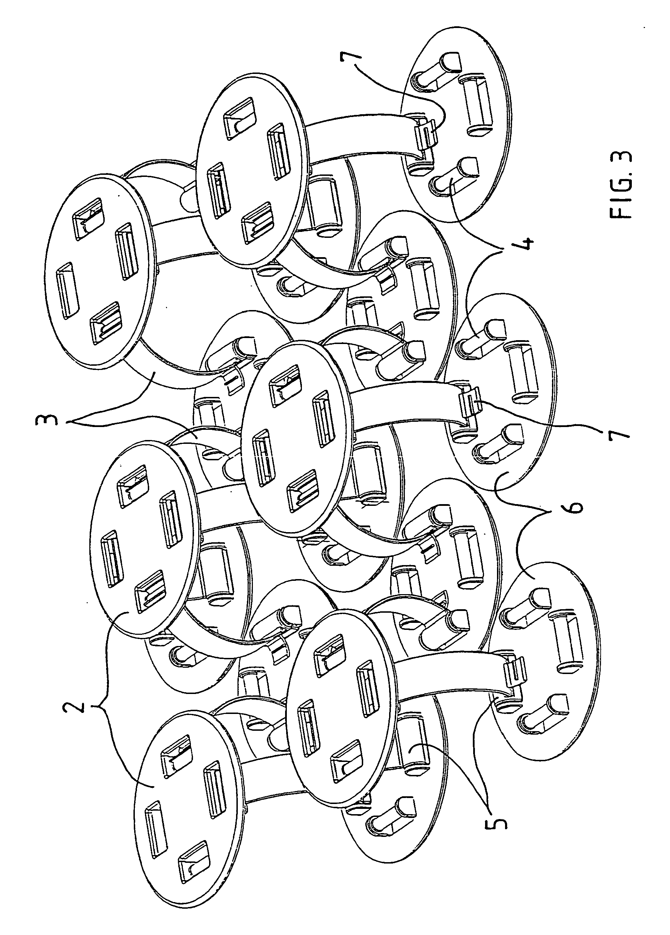

Wie in Figur 3 dargestellt ist, lässt sich aus den Auflagerflächen 2 und der Federarmen 3 ein zusammenhängendes Federnfeld aufbauen, wobei sich bei einer Betrachtung des Federnfeldes von oben eine bauchige Anordnung der Federarme 3 darstellt und von der anderen Seite aus betrachtet eine taillierte Anordnung der Federarme 3.

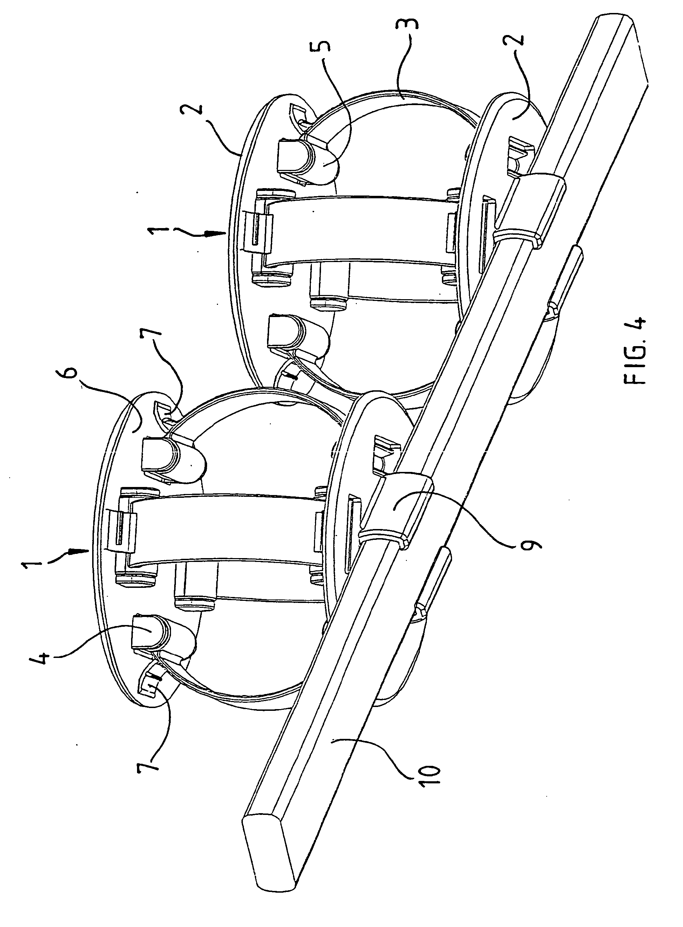

Wie in Figur 4 zu erkennen ist, können an den Außenseiten der nach unten gerichteten Auflagerflächen 2 der Matratzenfedern 1 Halteelemente 9 zur Festlegung der Matzratzenfeder 1 an einem Bettholm 10 angeordnet sein, so dass sich die Matratzenfeder 1 auch als Einzelfederelement einer Untermatratze verwenden lässt.

## Patentansprüche

1. Matratzenfeder zum Einbau in Polsterkissen oder Matratzen, mit einer oberen und einer unteren Auflagerfläche (2) mit Lagern (4) auf ihren zueinander gewandten Innenseiten für an ihren Enden mit Lageschalen (5) versehenen Federarmen (3), die in seitlichen Positionen an den Lageschalen (5) angeformt sind, **dadurch gegenzeichnet, dass** separate Federarme (3) im benachbarten Bereich der Lagerschalen (5) mit sich in Richtung der Innenseiten (6) der Auflagerflächen (2) und permanent daran anliegenden Stützlaschen (7) versehen sind.

2. Matratzenfeder nach Anspruch 1, **dadurch gekennzeichnet, dass** die Federarme (3) streifenförmig und leicht bauchig nach außen gewölbt ausgebildet sind.

3. Matratzenfeder nach einem der vorgenannten Ansprüche, **dadurch gekennzeichnet, dass** die Lager (4) als Drehlager mit Drehachsen und die Lagerschalen (5) als elastisch auf die Drehachsen, diese teilweise umgreifend, aufklippsbare Hohlzylinderabschnitte ausgebildet sind.

4. Matratzenfeder nach einem der vorgenannten Ansprüche, **dadurch gekennzeichnet, dass** die Auflagerfläche (2) mit den Lagern (4) einteilig aus einem wenig elastischen Kunststoffmaterial hergestellt ist.

5. Matratzenfeder nach einem der vorgenannten Ansprüche, **dadurch gekennzeichnet, dass** die Stützlaschen (7) auf der den Außenseiten der Federarme (3) zugewandten Seiten mit vorstehenden Querstegen (8) ausgestattet sind.

6. Matratzenfeder nach einem der vorgenannten Ansprüche, **dadurch gekennzeichnet, dass** mehrere obere und untere Auflagerflächen (2) regelmäßig zueinander versetzt durch wechselseitiges verrasten der Federarme (3) zu einem zusammenhängenden Federnfeld miteinander vernetzt sind.

7. Matratzenfeder nach einem der vorgenannten Ansprüche, **dadurch gekennzeichnet, dass** an einer Außenseite einer nach unten gerichteten Auflagerfläche (2) ein Halteelement (9) zur Festlegung der Matratzenfeder (1) an einem Bettholm (10) angeordnet ist.

## Claims

1. Mattress spring for incorporating in cushions or mattresses, having a top and a bottom bearing surface (2) with bearings (4) on its mutually facing inner sides for spring arms (3) which are provided with bearing shells (5) at their ends and are integrally formed on the bearing shells (5) in lateral positions, **characterized in that** separate spring arms (3), in the adjacent region of the bearing shells (5), are provided with supporting lugs (7) which extend in the direction of the inner sides (6) of the bearing surfaces (2) and butt permanently against the same.

2. Mattress spring according to Claim 1, **characterized in that** the spring arms (3) are in the form of strips which are curved to bulge outward slightly.

3. Mattress spring according to one of the preceding claims, **characterized in that** the bearings (4) are designed as rotary bearings with axes of rotation and the bearing shells (5) are designed as hollow-cylinder portions which can be clipped elastically onto the axes of rotation, partially engaging around the same in the process.

4. Mattress spring according to one of the preceding claims, **characterized in that** the bearing surface (2) is produced integrally with the bearings (4) from a plastic material which is not particularly elastic.

5. Mattress spring according to one of the preceding claims, **characterized in that** the supporting lugs (7) are provided with projecting crosspieces (8) on the sides which are directed towards the outer sides of the spring arms (3).

6. Mattress spring according to one of the preceding claims, **characterized in that** a plurality of top and bottom bearing surfaces (2) are interlinked with one another, in a state in which they are offset in relation to one another at regular intervals, to form a continuous spring arrangement by virtue of alternate latching of the spring arms (3).

7. Mattress spring according to one of the preceding claims, **characterized in that** a retaining element (9) is arranged on an outer side of a downwardly directed bearing surface (2) in order to secure the mattress spring (1) on a bed element (10).

## Revendications

1. Ressort de matelas devant être incorporé dans un coussin de rembourrage ou un matelas, comprenant une surface d'appui supérieure et une surface d'appui inférieure (2), avec des paliers (4) sur leurs surfaces tournées l'une vers l'autre pour des bras de ressort (3) munis à leurs extrémités de coques de palier (5) et formés dans des positions latérales sur les coques de palier (5), **caractérisé en ce que** des bras de ressort (3) séparés sont prévus dans une région adjacente des coques de palier (5) avec des pattes de support (7) s'appliquant dans la direction des côtés internes (6) des surfaces d'appui (2) de manière permanente contre ces dernières.

2. Ressort de matelas selon la revendication 1, **caractérisé en ce que** les bras de ressort (3) sont réalisés en forme de bandes et sont courbés vers l'extérieur en une forme légèrement bombée.

3. Ressort de matelas selon l'une quelconque des revendications précédentes, **caractérisé en ce que** les paliers (4) sont réalisés sous forme de paliers rotatifs avec des axes de rotation et les coques de palier (5) sont réalisées sous forme de portions cylindriques creuses pouvant être enclipsées élastiquement sur les axes de rotation, en les entourant partiellement.

4. Ressort de matelas selon l'une quelconque des revendications précédentes, **caractérisé en ce que** la surface d'appui (2) est réalisée d'une seule pièce avec les paliers (4) à partir d'un matériau en plastique de faible élasticité.

5. Ressort de matelas selon l'une quelconque des revendications précédentes, **caractérisé en ce que** les pattes de support (7) sont munies de nervures transversales saillantes (8) du côté tourné vers les côtés extérieurs des bras de ressort (3).

6. Ressort de matelas selon l'une quelconque des revendications précédentes, **caractérisé en ce que** plusieurs surfaces d'appui supérieures et inférieures (2) sont imbriquées les unes dans les autres en formant un champ de ressorts cohésif, de manière décalée régulièrement les unes par rapport aux autres par imbriquement alterné des bras de ressort (3).

7. Ressort de matelas selon l'une quelconque des revendications précédentes, **caractérisé en ce qu'**un élément de retenue (9) pour la fixation du ressort de matelas (1) sur un longeron de lit (10) est disposé sur un côté extérieur d'une surface d'appui (2) orientée vers le bas.
